# EUROPÄISCHE PATENTSCHRIFT

(11) **EP 1 913 223 B1**
(45) Veröffentlichungstag und Bekanntmachung des Hinweises auf die Patenterteilung: **02.05.2012**
(21) Anmeldenummer: 06791554.6
(22) Anmeldetag: 31.07.2006
(51) Int. Cl.: E06B 3/72, B61D 19/02, B60J 5/04

(54) **TÜRBLATT**
DOOR LEAF
VANTAIL DE PORTE

(30) Priorität: 01.08.2005 AT 12922005
(43) Veröffentlichungstag der Anmeldung: 23.04.2008
(73) Patentinhaber: Knorr-Bremse Gesellschaft mit beschränkter Haftung, 2340 Mödling (AT)
(72) Erfinder: BRAMAUER, Johann, A-3341 Ybbsitz (AT)
(74) Vertreter: Schönmann, Kurt
(86) Internationale Anmeldenummer: PCT/EP2006/007563
(87) Internationale Veröffentlichungsnummer: WO 2007/014736

(56) Entgegenhaltungen:
- DE-A1- 10 257 110
- DE-U1- 9 408 079
- FR-A- 1 369 829
- JP-A- 11 342 843

## Beschreibung

Die Erfindung betrifft ein Türblatt entsprechend dem Oberbegriff des Anspruches 1.

Aus der JP 11342843 ist eine Schiebetür bekannt, bei der im Türpaneel ein Rahmen montiert ist, wobei auf einer Seite des Rahmens ein Glasfenster fluchtend mit einer Seite des Paneels aufgesetzt ist.

Die FR 1 369 829 offenbart ein Türblatt einer um eine vertikale Achse öffnende Gebäudetür, die aus einem Rahmen und einer Deckfläche die aus Blech besteht, das um die Hauptschließkante herum gebogen ist.

Die DE 102 57 110 betrifft ebenfalls eine um eine vertikale Achse öffnende Tür, insbesondere eine Brandschutztür, bei der ein "flügeldeckendes Glas" auf eine Rahmenkonstruktion aufgebracht wird, beispielsweise verklebt wird; somit eindeutig eine Gebäudetür, die kein Vorbild für eine Schiebetür eines Schienenfahrzeuges abgibt.

Außenliegend ist in diesem Zusammenhang so zu verstehen, dass es sich um Schiebetüren handelt, über die man den Zug von Außen betreten kann, und bezieht sich nicht auf die räumliche Lage der Schiebetür im geöffneten Zustand. So können derartige Schiebetüren bzw. deren Türflügel - wie in den meisten Fällen - im geöffneten Zustand, entlang der Außenwand des Zuges verschoben, nach wie vor von außen sichtbar sein, oder aber auch beispielsweise beim Öffnungsvorgang im Inneren einer hohl ausgebildeten Außenwand verschwinden.

Derartige Türblätter mit "einlagig" aus Glas oder durchsichtigem Kunststoff ausgebildeten Flächen, in der Folge wird wegen der besseren Lesbarkeit immer nur von Glas gesprochen, die an der Innenseite mit einem Rahmen versehen sind, um die notwendige mechanische Stabilität zu sichern, sind seit einiger Zeit bekannt. Die Glasplatte kann dabei einstückig oder geteilt ausgebildet sein, es wird in der Folge zur besseren Lesbarkeit die Glasplatte nur im Singular erwähnt. Nachteilig an dieser Tür ist die durch den Rahmen geschaffene unebene Ausbildung, die besonders während des Öffnens der Tür zur Gefahr des Einklemmens von Fingern oder Gegenständen im Bereich des Türrahmens führt.

Allgemein sind Türblätter, an denen eine ganze Reihe von Betätigungseinrichtungen, Halterungen und Anlenkpunkte für den Türantrieb und die Türführungen befestigt werden müssen, seit langem bekannt. Um diese Türblätter optisch ansprechend und funktionell zu gestalten, weisen sie seit ihren Anfängen vor über 150 Jahren verglaste Bereiche auf. In den letzten Jahren wurde auf das früher übliche Punktschweißen der aus Metall bestehenden Rahmen zugunsten der Klebetcchnik verzichtet, die Lackierung wurde auf umweltfreundliche, wasserlösliche Lacke umgestellt, es wurde zwischen den beiden Metallflächen (Beplankung), die die Türblätter innen bzw. außen begrenzen, nicht nur die verschiedenen Steuerleitungen für Sensoren (Einklemmschutzl), Betätigungsorgane, Beleuchtung etc. verlegt, sondern auch Wärme- und Schallisoliermaterialien angeordnet und es wurden die Fenster nicht nur aus Sicherheitsglas, sondern ebenfalls aus thermisch und akustisch isolierendem Material bzw. in passendem Aufbau gefertigt, um den Komfort der Fahrgäste zu erhöhen und Energie zu sparen.

Es ist ein Ziel der Erfindung, ein Türblatt der eingangs genannten Art anzugeben, das die genannten Nachteile nicht aufweist und die optischen und funktionalen Vorgaben zumindest ebenso erfüllt wie die Türblätter gemäß dem Stand der Technik.

Erfindungsgemäß werden diese Ziele durch die im kennzeichnenden Teil des Anspruches 1 angegebenen Merkmale erreicht. Dadurch erreicht man im Inneren des Fahrzeuges eine völlig ebene Oberfläche, die bestmöglich die Einklemmgefahr beseitigt und auf der Außenseite eine Oberfläche die mit der Oberfläche des umgebenden Wagenkastens wesentlich besser fluchtet als bei Türen gemäß dem Stand der Technik, wodurch die Optik wesentlich verbessert wird.

Der Begriff "eben" darf nicht als eben im mathematischen Sinn über die gesamte Fläche des Türblattes verstanden werden, das Türblatt kann selbstverständlich wie im Stand der Technik der Querschnittform des Wagenkastens angepasst sein. Eben bedeutet, dass die im stand der Technik am Übergang vom Glas zum Rahmen unvermeidlichen lokalen und oft relativ harten Übergänge wegfallen bzw. auf die Außenseite des Wagons verlagert sind.

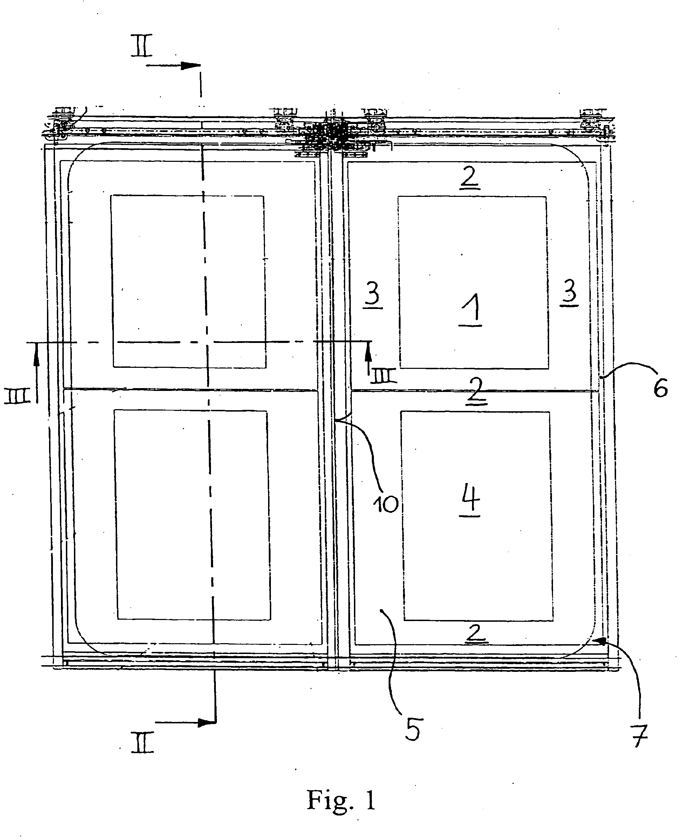

Die Erfindung wird im folgenden anhand der Zeichnungen näher erläutert. Dabei zeigt die Fig. 1, ganz schematisch, eine Innenansicht auf eine zweiflügelige erfindungsgemäß ausgestaltete Tür,
die Fig. 2, ebenfalls ganz schematisch, einen Schnitt entlang der Linie II-II der Fig. 1 und
die Fig. 3 einen Schnitt entlang der Linie III-III der Fig. 1.

Wie aus Fig. 1 ersichtlich ist, besteht der dargestellte, erfindungsgemäße Türflügel 1 im wesentlichen aus drei waagrecht verlaufenden Profilen 2 und zwei vertikal verlaufenden Profilen 3. Selbstverständlich sind auch nur zwei oder mehr als drei waagrecht verlaufende Profile 2 denkbar. Diese Profile 2, 3 können untereinander gleichen Querschnitt haben oder auch nicht, in der Darstellung wurde auch nicht festgelegt, ob sie an den Ecken bzw. im mittigen Bereich des Zusammentreffens auf Gehrung geschnitten sind oder nicht, dies hängt vom jeweils verwendeten Profil und der eventuellen notwendigen Führung von Kabeln oder Leitungen ab und kann vom Fachmann in Kenntnis der Erfindung leicht ausgewählt werden.

Auf den durch die Profile 2, 3 aufgebauten Rahmen 5 wird auf der Innenseite eine Glasplatte 4 geklebt, diese kann, wie im dargestellten Beispiel, in horizontaler Richtung im Bereich des mittleren Horizontalprofils 2 geteilt sein, um bei der Montage das Gewicht der Einzelplatten zu verringern und im Falle des Bruches die Reparatur zu vereinfachen. Die Platte bzw. Scheibe kann im Bereich der Nebenschließkante 6 an den Ecken 7 abgerundet sein, doch ist dies nicht zwingend notwendig.

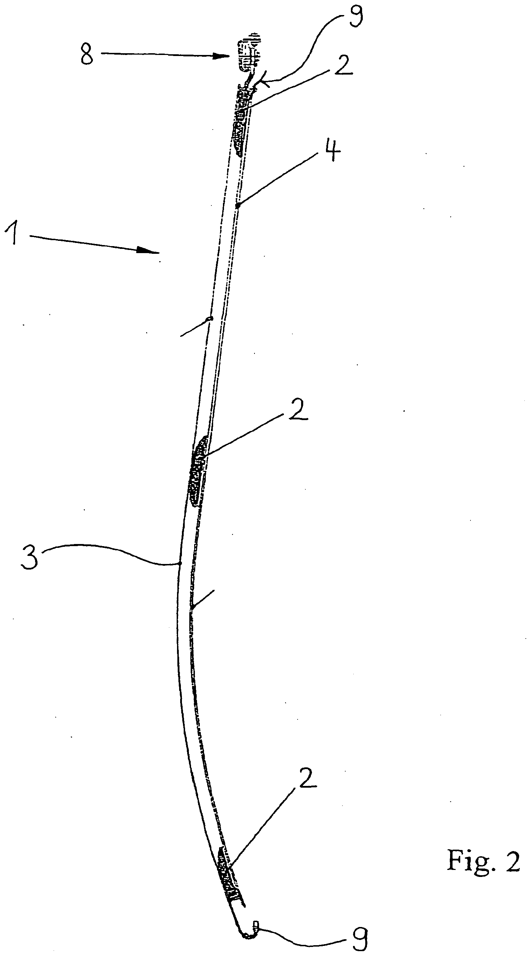

Wie aus der Fig. 2 ersichtlich ist, können, wie dies insbesondere bei vielen U-Bahn Garnituren der Fall ist, die Türblätter die Form eines allgemeinen Zylinders annehmen und im dargestellten Vertikalschnitt gebogen ausgebildet sein. Sowohl für Glas als auch für Kunststoff stellt dies kein Problem dar. Aus Fig. 2 ist auch gut ersichtlich, dass das obere Querprofil 2 sich als Befestigungspunkt für die Aufhängung 8 des Türblattes 1 anbietet und dass die am äusseren Rand befindlichen Profile mit Dichtungseinrichtungen 9 versehen sind.

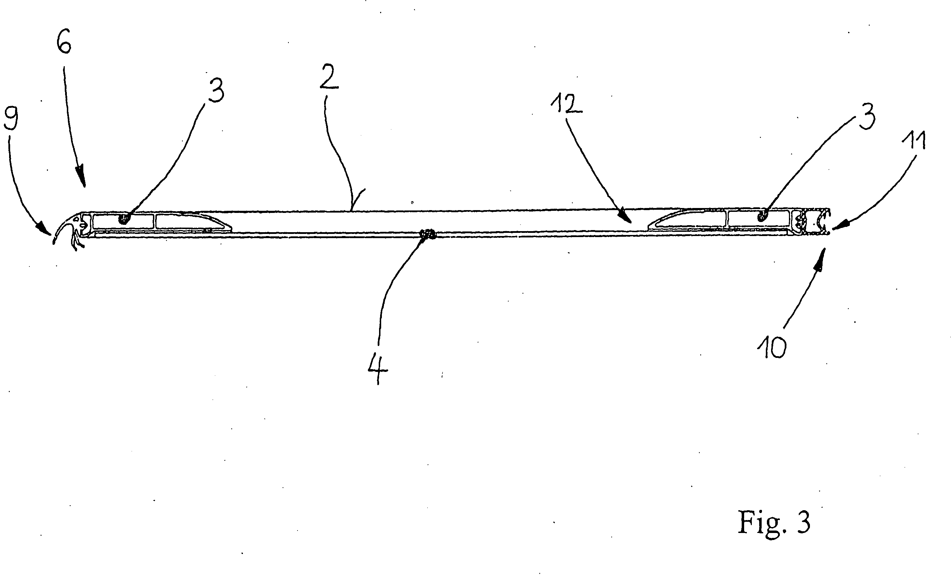

Die Fig. 3 zeigt die Vertikalprofile 3 und im Bereich der Nebenschließkante 6 ein Dichtprofil 9, im Bereich der Hauptschließkante 10 ein Dichtprofil, das auch als Fingerschutz 11 ausgebildet ist. Das nicht dargestellte, dazu symmetrische Türblatt bzw. im Falle einer einflügeligen Tür die Hauptschließkante am Türrahmen weist in diesem Fall ein entsprechend kongruentes Profil auf.

In Fig. 3 weist der Pfeil 12 auf eine der Kanten, die bei den Türen gemäß dem Stand der Technik innen liegen und dort die Einklemmgefahr bilden. Da diese Kanten erfindungsgemäß an der Außenseite ausgebildet sind, fällt diese Gefahr weg. Wie weiters ersichtlich ist, nimmt die Dicke der Profile 2, 3 auf ihrer Innenseite, das ist die der Mitte der Türfläche zugewandten Seite, mit einer Abschrägung verlaufend ab, was das automatische Reinigen der Außenseite erleichtert und das Fahrgeräusch durch Wegfall der üblichen scharfen Kante dämpft.

Die verwendeten Materialien und Herstellungsverfahren sind die gleichen wie im Stand der Technik, eine Erläuterung an dieser Stelle erübrigt sich daher.

## Patentansprüche

1. Türblatt einer außen liegenden Schiebetür von Eisenbahn- Schnellbahn- und U-Bahn-Wagons, das einen Rahmen (5) und eine auf der Innenseite des Rahmens (5) angeordnete, gegebenenfalls mehrteilig ausgebildete, zumindest teilweise durchsichtige Platte (4) aus Glas oder Kunststoff aufweist, **dadurch gekennzeichnet, dass** seine Aufhängung (8) und Führungen am Rahmen (5) angreifen und dass der Umriss der Platte (4) dem Umriss des Rahmens (5) zumindest im Wesentlichen entspricht.

2. Türblatt nach Anspruch 1, **dadurch gekennzeichnet, dass** der Rahmen (5) aus Profilen (2, 3) besteht, deren Dicke zur Mitte der Fläche des Türblattes hin sukzessive abnimmt.

## Claims

1. Door leaf of an external sliding door of railway, rapid transit and underground cars, comprising a frame (5) and a pane (4) made of glass or a plastic material, which is located on the inside of the frame (5), may be designed in several parts and is at least partially transparent, **characterised in that** its suspension (8) and its guides are applied to the frame (5) and **in that** the contour of the pane (4) at least substantially corresponds to the contour of the frame (5).

2. Door leaf according to claim 1, **characterised in that** the frame (5) consists of profiles (2, 3) the thickness of which is successively reduced towards the centre of the surface of the door leaf.

## Revendications

1. Ventail d'une porte coulissante se trouvant à l'extérieur de wagons de chemin de fer, de réseau express régional et de métropolitain, qui comporte un cadre (5) et une plaque (4) en verre ou en matière plastique, au moins en partie transparente, disposée du côté intérieur du cadre (5) et constituée, le cas échéant, en plusieurs parties, **caractérisé en ce que** sa suspension (8) et ses guidages attaquent le cadre (5) et **en ce que** le contour de la plaque (4) correspond au moins sensiblement au contour du cadre (5).

2. Ventail de porte suivant la revendication 1, **caractérisé en ce que** le cadre (5) est constitué de profilés (2, 3) dont l'épaisseur diminue successivement en direction du milieu de la surface du ventail de porte.
